# EUROPEAN PATENT SPECIFICATION

(11) **EP 2 725 763 B1**
(45) Date of publication and mention of the grant of the patent: **07.01.2015**
(21) Application number: 12306322.4
(22) Date of filing: 24.10.2012
(51) Int. Cl.: H04L 29/08, H04W 28/06, H04W 88/08, H04W 4/00

(54) **Apparatus, method and computer program for relaying payload data between two network nodes**
Vorrichtung, Verfahren und Computerprogramm zum Übermitteln von Nutzlastdaten zwischen zwei Netzwerkknoten
Appareil, procédé et programme informatique permettant de relayer des données de charge utile entre deux n'uds de réseau

(43) Date of publication of application: 30.04.2014
(73) Proprietor: ALCATEL LUCENT, 92100 Boulogne-Billancourt (FR)
(72) Inventor: Klein, Siegfried, 70469 Stuttgart (DE); Doetsch, Uwe, 74392 Freudental (DE); Bakker, Hajo, 71735 Eberdingen (DE); Weber, Andreas, 74251 Lehrensteinsfeld (DE)

(56) References cited:
- US-A1- 2008 186 202
- US-A1- 2012 182 934

## Description

Embodiments of the present invention relate to apparatuses and methods for efficiently relaying or conveying payload data in a distributed communications network, such as an Internet Protocol (IP) based wireless communications network.

### Background

A high number of sensors for the collection and reporting of a wide range of environmental data is already deployed in rural, urban, residential areas, private homes, company campuses and many other sites. The information collected by these sensors is often of high interest to many users and automated data evaluation systems. Therefore there is a need in the art to provide concepts which bring together deployed sensors with (software) applications being authorized to access their sensor data in a flexible way. Some prior art concepts are described in US 2008/186202 A1 or US 2012/182934 A1.

In the context of machine to machine (M2M) communication such sensors may be bound to related applications for accessing the sensor data. This requires a concept to flexibly reduce the communication overhead of sensors, in particular when attached to current or future wireless networks (e.g. 5^{th} generation networks, 5G). That is to say, as physical radio resources, such as bandwidth, are scarce it is important to aim at an improved transmission of sensor related data over the air interface. Thereby, the assumed communication characteristics of wireless sensors are very short data packets (e.g. only few bits), regular transmission of sensor data at long intervals (several seconds and longer), and spontaneous transmission of sensor data.

Current cellular wireless networks favor a full Internet Protocol (IP) approach for the exchange of data. Typically some kind of header compression may be applied at the air interface, such as, e.g., RObust Header Compression (ROHC). However, as the ratio between sensor data payload and total transferred information over the air interface is assumed to be far too low for efficient network operation in the presence of a high number of sensors, even when using known header compression techniques, there is a need for more efficient techniques.

### Summary

It is one finding of the present invention that the communication architecture of present wireless networks, such as Long-Term Evolution (LTE), for example, may be extended to more efficiently support the aforementioned communication characteristics of environmental sensors. Embodiments of the present invention may also be applied in the context of arising 5G wireless networks.

One basic idea behind some embodiments is to improve the ratio between sensor data payload and total transferred data for sensors by extending/simplification of the network interface layer comprising the physical (Layer 1, L1) and, in particular, the data link layer (Layer 2, L2) corresponding to the well-known Open Systems Interconnection (OSI) reference model. While the physical layer defines electrical and physical specifications for devices, the data link layer provides the functional and procedural means to transfer data between network entities and to detect and possibly correct errors that may occur in the physical layer.

The data link layer (L2) may be divided into two sublayers, commonly known as Media Access Control (MAC) and Logical Link Control (LLC) sublayers. The MAC sublayer provides addressing and channel access control mechanisms that enable several terminals or network nodes to communicate within a multiple access network that incorporates a shared medium. The MAC sublayer acts as an interface between the LLC sublayer and the network's physical layer, i.e., L1. The LLC sublayer provides multiplexing mechanisms that enable several higher layer protocols, such as IP (which is a Layer 3 protocol), for example, to coexist within a multipoint network and to be transported over the same network media.

If a destination point or node of a communication network does only support L1 and L2 protocols, some embodiments of the present invention suggest not wasting any bandwidth for exchanging header data needed for higher layer protocols, including Layer 3 (L3) up to Layer 7 (L7) of the OSI reference model, as such header data will be useless for the destination node anyway. Instead, when communicating towards the destination node, e.g. a last intermediate network node before the destination node may act as a higher layer terminator by throwing away useless higher layer header data, e.g., header data corresponding to L3 or higher. On the other hand, when communicating away from the destination node, i.e., when the destination node is now acting as an originating node, the intermediate network node immediately following the originating node may insert higher layer header data to allow a further data transport through the communication network, which may be IP based, for example.

According to one aspect of the present invention it is provided an apparatus of a communication network for relaying or conveying payload data between a first network node and a second network node. The apparatus comprises a transceiver comprising (analog and/or digital) receiver circuitry which is operable to receive a network layer (i.e. Layer 3 of the OSI reference model) signal destined for the second network node. The network layer signal may originate from the first network node and comprises the payload data and header data corresponding to the network layer (L3) and/or further higher logical layers (Layer 4, L4, to Layer 7, L7) of the OSI reference model, such as the transport layer (L4), the session layer (L5), the presentation layer (L6), the application layer (L7), or combinations thereof. Further, the apparatus comprises a processor which is operable to remove at least part or all of the header data to obtain a reduced data link layer (L2) signal comprising the payload data. That is to say, the header data corresponding to the network layer (L3) and/or the higher logical layers is not contained in the reduced data link layer signal, whereas header data corresponding to the data link layer (L2) may be contained in the reduced data link layer signal. Hence, removing means completely discarding the higher layer header data and should not be confused with any header compression techniques. A transceiver comprising (analog and/or digital) transmitter circuitry of the apparatus is operable to forward or transmit the reduced data link layer signal to the second network node, which may not be able to support higher layer protocols (including L3 up to L7).

More generally, embodiments may provide an apparatus of a communication network for relaying or transmitting payload data between a first network node and a second network node. The apparatus comprises a transceiver which is operable to receive a first signal of a high or higher protocol layer (e.g. L3) of a network protocol stack, wherein the first signal of the higher protocol layer is destined for the second network node and may originate from the first network node. Thereby the first signal of the higher protocol layer comprises the payload data as well as header data corresponding to the higher protocol layer and/or more protocol layers above the higher protocol layer (e.g. L4, L5, etc.). The apparatus further comprises a processor which is operable to remove at least part (preferably all) of said header data to obtain a second (reduced) signal of a low or lower proto-col layer (e.g. L2) of the network protocol stack, the second (reduced) signal of the lower protocol layer comprising the payload data without the removed header data. Naturally, the low or lower protocol layer (e.g. L2) is logically lower than the high or higher protocol layer (e.g. L3), i.e., the higher protocol layer is logically above the lower protocol layer. The higher protocol layer may also be understood as a first network protocol layer and the lower protocol layer may be understood as a second network protocol layer, the second network protocol layer being logically lower than or below the first network protocol layer. Moreover a transceiver of the apparatus is operable to forward the second (reduced) signal of the lower protocol layer to the second network node. That is to say, superfluous header data of higher network protocol layers may be discarded before forwarding the payload with or by means of a lower network layer signal.

According to a further aspect it is provided an apparatus of a communication network for relaying/transmitting or conveying payload data between the second network node and the first network node, i.e., for communicating in the opposite direction. Such an apparatus comprises a transceiver comprising (analog and/or digital) receiver circuitry which is operable to receive a (reduced) lower protocol layer (e.g. data link layer, L2) signal destined for the first network node. The reduced lower protocol layer signal originates from the second network node and comprises the payload data without any header data corresponding to at least one higher protocol layer (e.g., the network layer, L3) of the network protocol stack. However, the reduced lower protocol layer signal may comprise header data corresponding to the lower protocol layer (e.g. L2). A processor is operable to add header data corresponding to the at least one higher protocol layer to the received reduced lower protocol layer signal to obtain a higher protocol layer (e.g. L3) signal. Further, a transceiver comprising (analog and/or digital) transmitter circuitry of the apparatus is operable to forward the higher protocol layer (e.g. L3) signal comprising the payload data and the header data corresponding to the at least one higher protocol layer (e.g. L3) and/or higher protocol layers (L4 up to L7) to the first network node.

Yet another aspect of the present invention provides a corresponding method of a communication network for relaying payload data between a first network node and a second network node, wherein the method comprises a step of receiving a higher protocol layer (e.g. network layer, L3) signal destined for the second network node. The higher protocol layer signal may originate from the first network node and comprises the payload data and header data corresponding to the higher protocol layer (e.g. L3) and/or even higher logical layers (e.g. L4 to L7). The method also comprises a step of removing at least part (in particular all) of the higher protocol layer header data to obtain a reduced lower protocol layer (e.g. data link layer, L2) signal comprising the payload data, and a step of forwarding the reduced lower protocol layer signal to the second network node.

For the reverse direction, e.g. for the uplink, embodiments provide a method of a communication network for relaying payload data between the second network node and the first network node, wherein the method comprises receiving a reduced lower network protocol layer (e.g. data link layer) signal destined for the first network node. The reduced lower network protocol layer signal originates from the second network node and comprises the payload data without any header data corresponding to the next higher network protocol layer (e.g. network layer, L3) and/or more higher network protocol layers (e.g. L4 up to L7). Further, the method comprises adding said header data, i.e., at least the higher network protocol header data, to the received reduced lower protocol layer signal to obtain a higher protocol layer (L3) signal. After that, the higher protocol layer signal comprising the payload data and the higher protocol layer (e.g. L3 up to L7) header data is forwarded to the first network node.

Some embodiments comprise a digital control circuit installed within an apparatus for performing at least one of the above methods. Such a digital control circuit, e.g. a Digital Signal Processor (DSP) or an Application Specific Integrated Circuit (ASIC), needs to be programmed accordingly. Hence, yet further embodiments also provide a computer program having a program code for performing embodiments of the methods, when the computer program is executed on a computer or a digital processor.

In embodiments the communication network may comprise wired parts, such as wired Internet, as well as wireless parts, such as present or future wireless communication networks e.g. standardized by the 3^{rd} Generation Partnership Project (3GPP), as Global System for Mobile Communications (GSM), Enhanced Data rates for GSM Evolution (EDGE), GSM EDGE Radio Access Network (GERAN), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and wireless communication network are used synonymously.

The mobile communication system may comprise a plurality of transmission points or base stations operable to communicate radio signals with a mobile transceiver. In embodiments, the mobile communication system may comprise mobile transceivers and base station transceivers as network nodes. A mobile transceiver may correspond to a smartphone, a cell phone, user equipment, a laptop, a notebook, a personal computer, a Personal Digital Assistant (PDA), an Universal Serial Bus (USB) -stick, a car, etc. A mobile transceiver may also be referred to as User Equipment (UE) or user in line with the 3GPP terminology. In particular, in the context of the present invention, a mobile transceiver may also be a wireless environmental sensor, acting as a sensor node attached to a base station of the wireless communication network. Hence, the second network node may be a wireless environmental sensor according to some embodiments. A wireless environmental sensor, according to embodiments, is operable to receive from and/or transmit to an associated base station a reduced lower protocol layer (e.g. data link layer) signal comprising sensor payload data without any header data corresponding to higher network layers (e.g. ≥ L3). That is to say, the wireless environmental sensor may only support L1/L2 and not any higher layers (≥ L3). In contrast, the first network node may be regarded as an application node operable to execute an application exchanging data with a wireless environmental sensor node. The application node may support L1 to L7 protocol stacks instead.

A base station may be located in the fixed or stationary part of the network or system. A base station transceiver may correspond to a remote radio head, a transmission point, an access point, a macro cell, a small cell, a micro cell, a femto cell, a metro cell etc. A base station transceiver may be regarded as a wireless interface of a wired network, which enables transmission of radio signals to a UE or mobile transceiver or, in particular, a wireless sensor node. Such a radio signal may comply with radio signals as, for example, standardized by 3GPP or, generally, in line with one or more of the above listed systems. Thus, a base station transceiver may correspond to a NodeB, an eNodeB, a BTS, an access point, etc. In embodiments, a base station may be regarded as an intermediate network node immediately preceding or succeeding an associated wireless sensor node. While a base station typically supports higher protocol layers, an associated sensor does not. Therefore, the principles of the present invention may be, in particular, realized in base stations of wireless communication systems.

Hence, in some embodiments the apparatus for relaying or conveying payload data may be deployed in or coupled with a base station. That is to say, a base station may function as a termination point for the network layer (L3) and/or higher layers. For the downlink, i.e. the direction from the first to the second network node, the base station may fully terminate L3 (and L4 up to L7) header data before forwarding the extracted payload data via a L2 protocol to the second network node. For the uplink, i.e. the direction from the second to the first network node, the base station may likewise add L3 (and L4 to L7) header data to the received L2 data, which only comprises L2 headers and the payload. In other words, the base station may make the received payload data from the second network node higher layer (≥ L3) conformant before forwarding it to the first network node through the network.

Some embodiments of the present invention are particularly useful when employed when wireless sensors attached to base stations do not support the network layer (L3) and/or higher logical layers (L4 up to L7) of the OSI reference model, such as the Internet protocol suite (IP/TCP), for example. The Internet Protocol (IP) is the principal L3 communications protocol used for relaying datagrams (also known as network packets) across an internetwork using the Internet Protocol Suite. Responsible for routing packets across network boundaries, it is the primary protocol that establishes the Internet. The Transmission Control Protocol (TCP) is one of the core L4 protocols of the Internet Protocol Suite. TCP is one of the two original components of the suite, complementing the Internet Protocol (IP), and therefore the entire suite is commonly referred to as TCP/IP. TCP provides reliable, ordered delivery of a stream of octets from a program on one computer to another program on another computer. TCP is the L4 protocol used by major Internet applications such as the World Wide Web, email, remote administration and file transfer. Other applications, which do not require reliable data stream service, may use the User Datagram Protocol (UDP) as L4 protocol, which provides a datagram service that emphasizes reduced latency over reliability.

Some embodiments may reduce protocol overhead by transmitting payload/sensor data to and from sensors directly over the L2 (MAC layer) of the air interface (L1), thereby saving valuable spectrum bandwidth. The IP protocol between a sensor and an associated application may be terminated at the base station or at a base station controller, i.e., there may be no IP protocol stack within the sensor node. In embodiments there is no transmission of higher layer protocol overhead (e.g. IP/TCP header) over the air interface for sensor data. Consequently, some embodiments introduce an enhanced MAC layer within the base station supporting two different MAC entities: one for none sensor data (e.g. with ROHC) and a novel MAC entity supporting data transmission without any higher layer protocol overhead for sensor data.

### Brief description of the Figures

Some embodiments of apparatuses and/or methods will be described in the following by way of example only, and with reference to the accompanying figures, in which
- Fig. 1: shows a first embodiment of an apparatus of a communication network for relaying payload data between two network nodes;
- Fig. 2: shows a second embodiment of an apparatus of a communication network for relaying payload data between two network nodes;
- Fig. 3: shows a registration and communication procedure between a wireless sensor and an application network node, according to an embodiment;
- Fig. 4a: shows an embodiment of a downlink method of a network for communicating payload data between two network nodes; and
- Fig. 4b: shows an embodiment of an uplink method of a network for communicating payload data between two network nodes.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g.,* "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

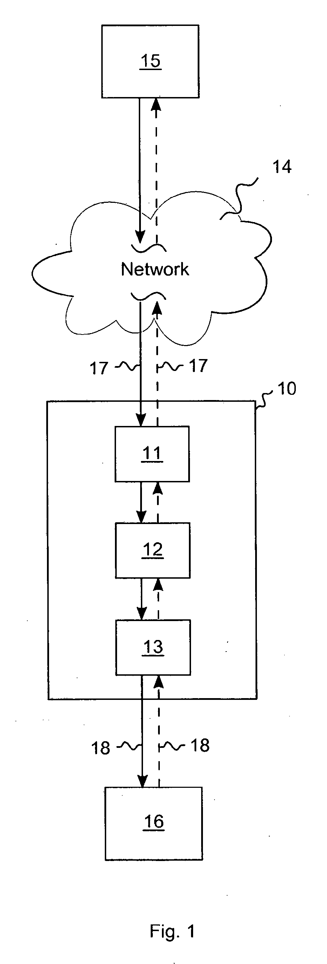

Fig. 1 schematically illustrates a communication network 14 comprising an apparatus 10 for relaying or transporting payload data (i.e. useful data) between a first network node 15 and a second network node 16.

In direction from node 15 to node 16, e.g. downlink direction, the first network node 15 may be regarded as an originating node for the payload data which is encapsulated or wrapped in higher layer protocol formats for its transport through the network 14, which may be an IP based network such as the Internet. The originating network node 15 may generate a (high or) higher protocol layer (e.g. network layer) signal 17 destined for the second network node 16, wherein the higher protocol layer signal 17 comprises the payload data and header data corresponding to the higher protocol layer (e.g. network layer) and/or eventually even higher network protocol layers. The higher protocol layer may be the Layer 3 (L3) or the Internet layer in some applications. Hence, the higher protocol layer signal 17 comprises header data corresponding to higher protocol layers, such as L3 protocols, L4 protocols, etc. The apparatus 10, which is coupled between the network nodes 15 and 16, comprises a transceiver 11 which is operable to receive the higher protocol layer signal 17 destined for the second or destination network node 16. As has been explained before, the higher protocol layer signal 17 comprises the payload data and header data corresponding to higher protocol layers equal to or higher than the high or higher protocol layer (e.g. L3). The apparatus 10 also comprises a processor 12 which is operable to remove/discard at least a part or preferably all of the higher protocol layer header data to obtain a reduced (low or) lower protocol layer (e.g. data link layer, L2) signal 18 still comprising the payload data, however, without the removed higher protocol layer header data corresponding to the higher protocol layer and even higher. In other words the processor 12 may extract the payload data from the higher protocol layer packets 17 and embed the extracted payload data in a lower network layer (e.g. L2) protocol, without using higher network protocol layer (e.g. L3, L4, etc.) header data. Further, the apparatus 10 comprises a transceiver 13 which is operable to forward the reduced lower protocol layer signal 18 to the second network node 16. In other words, higher level protocols for layers higher than the lower protocol layer (e.g. L2 or data link layer) may be terminated by the apparatus 10. According to embodiments, the apparatus 10 may extract the payload from the higher protocol layer signal 17, throw away higher layer header information e.g. corresponding to L3 and higher, and encapsulate the extracted payload into lower protocol layer (e.g. L2) frames without any header information from layers higher than the lower layer, e.g. L2.

The apparatus 10 may also be used in the reverse communication direction from the second network node 16 to the first network node 15, e.g. in uplink direction. In this case the transceiver 13 is operable to receive a reduced lower network protocol layer (e.g. data link layer) signal 18 destined for the first network node 15, wherein the reduced lower protocol layer signal 18 originates from the second network node 16 and comprises payload data without any header data corresponding to a higher network protocol layer (e.g. network layer, L3) and/or higher logical layers of the OSI reference model). For the uplink case the processor 12 is operable to add such higher protocol layer header data to the received reduced lower protocol layer signal 18 to obtain a higher protocol layer (e.g. L3) signal 17. The transceiver 11 is operable to forward the higher protocol layer signal 17 comprising the payload data and header data corresponding to the higher protocol layer (L3) and/or even higher protocol layers to the first network node 15 via the network 14.

According to embodiments the processor 12 may be operable to access information on the second network node 16 and may be operable to remove the higher layer (e.g. ≥ L3) header data from the higher protocol layer signal 17, if said information on the second network node 16 indicates that the second network node 16 does not support the higher protocol layer (L3) and/or even higher network protocol layers. That is to say, the apparatus 10 may terminate the higher layer protocols only for such cases in which the network node 16 is not able to support such higher protocol layers. For example, this may be the case if network node 16 is a wireless environmental sensor node being attached to the network 14 via a base station of a mobile communication network, such as LTE or any other present or future mobile communication network. In such cases the apparatus 10 may be coupled to or comprised by a base station functioning as a higher protocol layer termination for the associated wireless sensor node 16. Hence, according to some embodiments the apparatus 10 may be a base station of a wireless communication network, the base station serving the second network node 16. In such an embodiment the transceiver 13 or its transmitter part may be operable to forward or transmit a reduced data link layer (L2) signal 18 to the second network node 16 via a wireless communication channel between the base station 10 and the second network node using data link layer (L2) frames, as, for example, MAC frames.

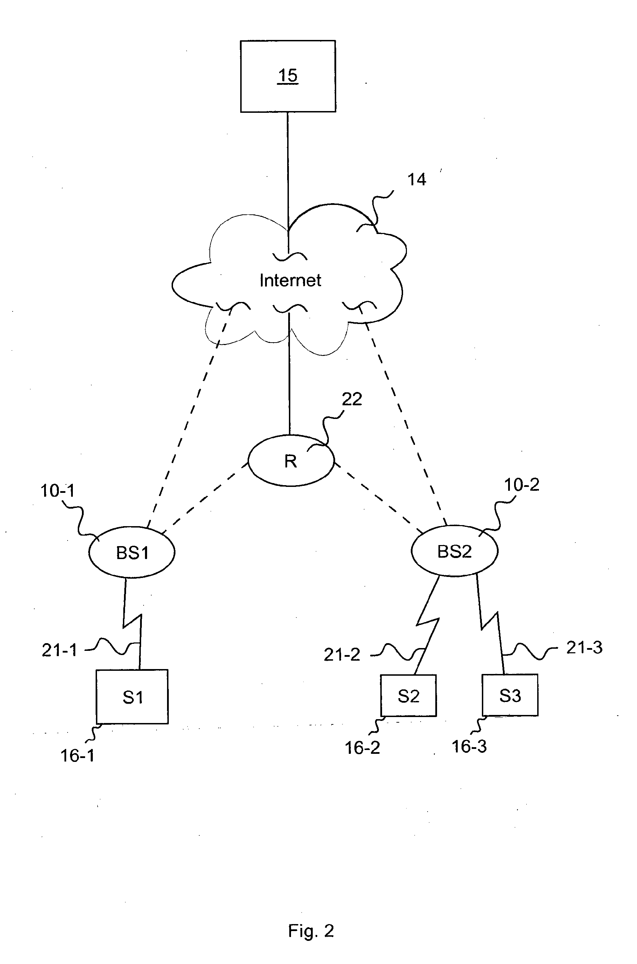

As will be explained in more detail with reference to Fig. 2, the received higher protocol layer signal 17, such as e.g. a network layer signal, may have been redirected to the apparatus 10 from some register network node (not shown in Fig. 1) having registered an association between the apparatus 10 and the second network node 16 in order to find a network route from the first network node 15 to the second network node 16 via the apparatus 10. For example, the mentioned register network node, which may be a global network node of the network 14 or a node of a sub-network thereof, may comprise a routing table for the first node 15 where to find the second node 16. Thereby a network address (L3 address) of the apparatus 10 may e.g. be used as a (temporary) care-of network address (L3) of the second network node 16. A network address (L3) of the register network node may work as a home address for the second network node 16. In this way the second network node 16 may be found by addressing the register network node as a sort of home register, as it comprises further routing information on where to send data packets for the network node 16.

Such a home register may be particularly necessary, as the second network node 16, which may be a wireless environmental sensor for example, may have no own higher layer (≥ L3) network address. For example, the second network node 16 may not have an own IP-address, as it may not support TCP/IP. In this case, the first network node 15, which may execute an application exchanging useful data with the second network node 16, may look up a network path to the second network node 16 in the register node. The register node may indicate a network path to the second network node 16 via the intermediate apparatus 10, which may be a base station according to some embodiments. For that purpose, the register node may comprise an identifier of the second network node 16 which may be provided to the register node from the apparatus 10 together with a network identifier of the apparatus 10 itself. In some embodiments, the identifier of the second network node 16 may comprise a Uniform Resource Locator (URL) and/or a Media Access Control (MAC) address of the second network node 16. Thereby, the MAC-address of the second network node 16 denotes a L2 address. The network identifier of the apparatus 10 may e.g. comprise an IP address of the apparatus 10, which is a L3 address. With the help of the apparatus' 10 IP-address it is possible to find a path from the first network node 15 through the IP-based network 14 to the apparatus 10. With the help of the second network node's URL or MAC-address the apparatus 10 may address and schedule a L2-signal to the attached second network node 16.

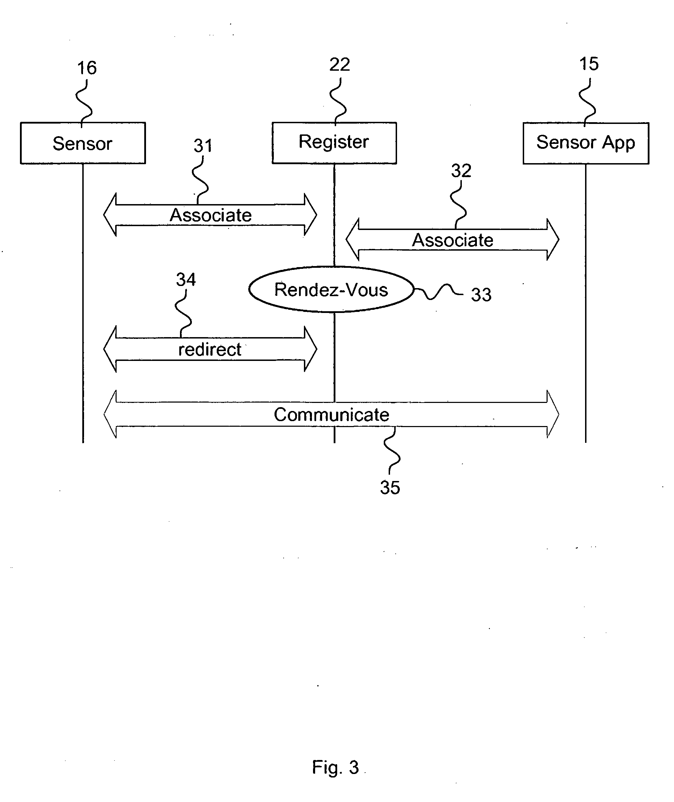

In a particular embodiment, which will be explained in more detail with reference to Figs. 2 and 3, the received network layer signal 17 may comprise internet layer and/or transport layer header data, wherein the processor 12 is operable to remove IP and/or TCP header data, and wherein the transceiver 13 is operable to forward the payload data as MAC-layer data without the removed IP- and/or TCP header data. That is to say, embodiments of the present invention may abandon the full IP approach of current wireless networks for the exchange of data. This is particularly useful when taking into account the properties of wireless sensors such that embodiments may enable a wireless base station to handle a high number of wireless environmental sensors not being able to "speak" TCP/IP by introducing an enhanced MAC layer. As the number of environmental sensors is likely to be increased drastically in the future, this may keep the resulting data traffic over the air interface within reasonable boundaries, as higher layer protocol overhead is not transmitted between base stations and associated sensors.

Fig. 2 illustrates an embodiment where the apparatus 10 is incorporated by a base station of a wireless communication network.

Fig. 2 exemplarily shows two base stations 10-1, 10-2. Base station 10-1 has associated thereto a wireless sensor node 16-1. Base station 2 10-2 has exemplarily associated thereto two wireless sensor nodes 16-2, 16-3. The base stations 10-1, 10-2 communicate with their associated wireless sensor nodes 16-1 and 16-2, 16-3 via wireless channels 21-1 and 21-2, 21-3, respectively. Transmission over the wireless channels 21 is defined by the physical layer or L1. The physical layer defines means of transmitting raw bits rather than logical data packets over the wireless links 21 connecting the base stations 10 and the wireless sensor nodes 16. Instead, the data link layer or L2 provides functional and procedural means to transfer data between network entities and may provide means to detect and possibly correct errors that may occur in the physical layer. A prominent example of a data link protocol is the MAC sublayer protocol.

The base stations 10-1 and 10-2 may be coupled to a register network node 22 as well as other network nodes of the IP-based network 14, which may be the Internet. Thereby, the connections between the base stations 10-1, 10-2 and the register network node 22 are optional, respectively. According to some embodiments, the register network node 22 may function as a home register for the wireless sensors 16, hence comprising routing information on how to reach the wireless sensors 16 from network nodes 15 running sensor applications that want to access sensor data of the sensors 16. In some embodiments the register network node 22 may act as a router towards the sensors 16 itself. In other embodiments it may just inform an application node 15 about the IP address of a base station 10 serving the sensor 16 of interest, possibly by means of a sensor specific URL. That is to say, the register node 22 may have registered an association between a base station 10-1, 10-2 and an associated wireless sensor node 16-1 or 16-2, 16-3, to find a network route from the application network node 15 to the wireless sensor node 16 via the base station 10-1 or 10-2. As has been explained before, the registered association may comprise an identifier of the wireless sensor node 16 in the form of a URL or a MAC-address which may be provided to the register node 22 during a registration procedure from the base station 10 together with a network identifier of the base station 10 itself in the form of an IP-address, for example.

In the following, it will be exemplarily described how a wireless environmental sensor 16 may attach to an LTE network, how it may be paired with a corresponding application running on a related network node 15 and how sensor or payload data may be transmitted from the sensor 16 to the application running on the network node 15 via an extended 4G or 5G wireless network.

After a wireless environmental sensor 16 has been installed, it may attach or associate to its serving base station or eNodeB 10 via a modified uplink random access procedure (RACH procedure, RACH = Random Access Channel). According to some embodiments possible modifications to known RACH procedures could either be the use of dedicated (i.e. sensor-specific) preambles or the extension of involved Radio Resource Control (RRC) uplink messages with additional information elements possibly indicating the sensor type and its capabilities. Such modifications may allow the base station 10 to detect that the uplink random access has been triggered by a wireless sensor 16 instead of a normal UE. Optionally, a modified uplink access procedure may allow the transfer of sensor identification. An additional RRC message may be used for the transfer of the sensor identification if it is not already transferred as part of the RACH procedure.

Further, the base station 10 may establish a network connection to the register node 22 in order to associate or register the wireless sensor node 16 to the register node 22 (see Fig. 3, reference numeral 31). Hence, the base station 10 may be operable to receive sensor identification data from the wireless sensor node 16 via an uplink random access procedure and to provide received sensor identification data to the register node 22 of the network 14, wherein the register node 22 may provide a network route from the first network node 15 to the wireless sensor node 16 via the base station 10. The register or register network node 22 may serve two purposes: It may know details about the sensor node 16 and it may redirect applications running on application network nodes 15 to the wireless sensor 16. In other words, the register network node 22 may work similar to a home agent for Mobile-IP for registered environmental sensors 16.

As has been mentioned before, the register 22 may be a global register or a sub-network-specific register, for example. Various wireless environmental sensors 16 serving for different purposes may register to the register node 22. This registration procedure may help application network nodes 15 to find network routes or paths to adequate sensors 16 from which they want to retrieve sensor data, such as, for example, temperature data, velocity data, pressure data, etc. To find adequate sensors 16 a sensor application may also associate itself with the register 22, see Fig. 3.

After a rendezvous mechanism 33 between the sensor 16 and an appropriate application 15 is complete, the register node 22 may provide a redirection notification 34 to the base station 10. That is to say, the register node 22 may provide the application node 15 with an IP-address of the base station 10 or other adequate routing information allowing the application network node 15 to find a path to the base station 10 and its associated sensor 16 of interest.

Upon receiving a redirect for a particular sensor 16, the serving base station 10 may establish a network connection to the associated application process running on the application network node 15. In interaction with the application, under consideration of the sensor attributes found in the register 22 and under consideration of already existing connections for the sensor 16, the base station 10 may negotiate the requested sensor information and reporting interval with the application running on network node 15. If this has been done, the sensor 16 of interest may communicate (reference numeral 35) with its associated sensor application running on network node 15. This two-way communication (i.e. up- and/or downlink) may be performed via the base station 10 acting as an apparatus for relaying sensor or payload data between the sensor node 16 and the network node 15. Optionally, the base station 10 may reconfigure the sensor 16 according to reporting interval, desired data, MAC-address and optional sleep modes.

For that purpose, as shown in Fig. 1, the base station 10 may comprise a transceiver 13 which is operable to receive a reduced data link layer signal 18 destined for the application node 15 and originating from the wireless sensor node 16. The reduced data link layer signal comprises the sensor or payload data without any TCP/IP header data. Further, the base station 10 comprises a processor 12 which is operable to add said TCP/IP header data to the received reduced data link layer signal 18 to obtain a TCP/IP conformant signal 17. A transmitter 11 of the base station 10 may be operable to forward the network layer signal 17 comprising the sensor payload data as well as the added TCP/IP header data to the application node 15 via the Internet 14.

The base station 10 may control a sensor reporting interval. If the wireless sensor node 16 is assumed to transmit sensor data, a scheduler may associate uplink radio resources (e.g. time and/or frequency) for a MAC-address associated to the sensor node 16. The sensor node 16 may monitor the Physical Downlink Control Channel (PDCCH) at this time. This may involve that the sensor node 16 enters an active mode and establishes synchronization to the base station 10. The sensor node 16 may put its measured payload data at time and frequency positions related to its MAC-address signaled to it in the PDCCH uplink grant. Note that the sensor node's MAC-address may be variable according to embodiments. The sensor payload data may be secured by a checksum. The common knowledge of a key, for example a Cyclic Redundancy Check (CRC) generator polynomial, between the base station 10 and the sensor node 16 may allow to detect transmission errors and may secure the transmission against misinterpretation of the MAC-address.

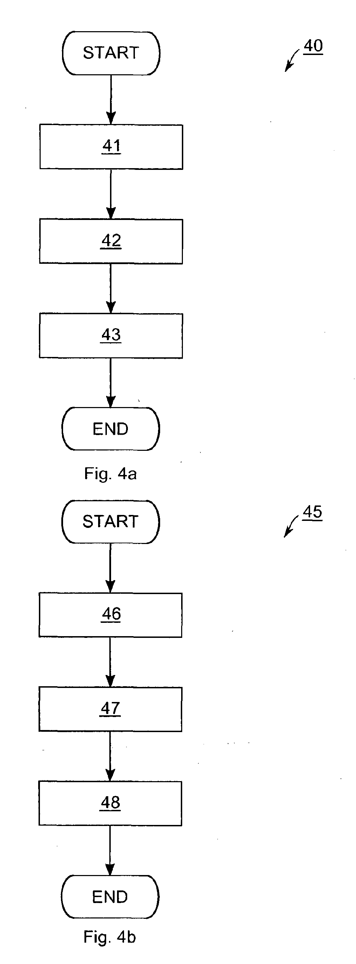

Turning now to Figs. 4a and 4b embodiments of the present invention will be summarized by describing to methods 49 and 45 of a communication network for communicating payload data between a first network node 15 and a second network node 16.

The downlink method 40 comprises a first step 41 of receiving a network layer signal 17 destined for the second network node 16, wherein the network layer signal 17 originates from the first network node 15 and comprises the payload data and header data corresponding to the network layer and/or higher logical layers. Further, the downlink method 40 comprises a step 42 of removing at least a part (preferably all) of the higher layer header data to obtain a reduced data link layer (L2) signal comprising the payload data without header data corresponding to the network layer and/or higher logical layers. Also, the downlink method 40 comprises a step 43 of forwarding or transmitting the reduced data link layer signal 18 to the second network node 16. In some embodiments the reduced data link layer 18 may be forwarded or transmitted to the second node 16 via a wireless communication channel 21 between the apparatus 10 and the second network node 16.

Fig. 4b shows an uplink method for transporting payload data between the second network node 16 and the first network node 15. The uplink method 45 comprises a first step 46 of receiving a reduced data link layer signal 18 destined for the first network node 15 and originating from the second network node 16. The reduced data link layer signal 18 comprises the payload data without any header data corresponding to the network layer and/or higher logical layers of the OSI reference model. In other words, the reduced data link layer may only comprise Layer 1 and/or Layer 2 header data. Further, the uplink method 45 comprises a step 47 of adding the higher layer header data to the received reduced data link signal 18 to obtain a network layer signal 17. The obtained network layer signal 17 now also comprises header data corresponding to the network layer and/or higher logical layers. In a further step 48, the network layer signal 17 comprising the payload data and the higher layer header data is forwarded, e.g. from a base station 10, to the first network node 15.

To summarize, embodiments of the present invention may allow serving a very high number of sensors 16 by a base station 10 by introducing a novel MAC addressing scheme and by minimizing the ratio between the payload of the sensor data to the total protocol data being transported over the air interface for the transmission of sensor data. With the pressure to transport wireless sensor data efficiently caused by the forecast increasing number of sensors, efficient solutions with respect to spectrum are required. Embodiments of the present invention may help to reduce the required spectrum to the bare minimum.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. A system comprising an apparatus (10) and a base station (10) of a communication network (14) for relaying payload data between a first network node (15) and a second network node (16), the apparatus (10) comprising:
a receiver (11) operable to receive a higher protocol layer signal (17) for the second network node (16), the higher protocol layer signal (17) originating from the first network node (15) and comprising the payload data and header data corresponding to a higher protocol layer of a network protocol stack;
a processor (12) operable to remove at least part of the header data to obtain a reduced lower protocol layer signal (18) comprising the payload data; and
a transmitter (13) operable to forward the reduced lower protocol layer signal (18) to the second network node (16),
wherein the apparatus (10) is coupled to the base station of a wireless communication network, the base station (10) serving a wireless environmental sensor node (16) as the second network node, wherein the base station (10) is operable to receive sensor identification data from the wireless sensor node (16) via an uplink random access procedure and to provide the received sensor identification data to a register node (22) of the network (14), the register node (22) providing a network route from the first network node (15) to the wireless sensor node (16) via the base station (10) for the relaying of the payload data.

2. The system of claim 1, wherein the processor (12) is operable to access information on the second network node (16) and to remove the header data from the higher protocol layer signal (17) if said information indicates that the second network node (16) does not support the higher protocol layer.

3. The system of claim 1, wherein the received higher protocol layer signal (17) has been redirected to the apparatus (10) from a register node (22) having registered an association between the apparatus (10) and the second network node (16) to find a network route to the second network node (16) via the apparatus (10).

4. The system of claim 3, wherein the registered association comprises an identifier of the second network node (16) provided to the register node (22) from the apparatus (10) together with a network identifier of the apparatus (10).

5. The system of claim 4, wherein the identifier of the second network node (16) comprises a Media Access Control (MAC) address of the second network node (16).

6. The system of claim 4, wherein the network identifier of the apparatus (10) comprises an Internet Protocol (IP) address of the apparatus (10).

7. The system of claim 1, wherein the received higher protocol layer signal (17) comprises internet layer and/or transport layer header data, wherein the processor (12) is operable to remove Internet Protocol (IP) and/or Transmission Control Protocol (TCP) header data, and wherein the transmitter (13) is operable to forward the payload data as Media Access Control (MAC) layer data without the removed IP- and/or TCP header data.

8. The system of claim 1, wherein the apparatus (10) is a base station of a wireless communication network, the base station (10) serving the second network node (16), and wherein the transmitter (13) is operable to forward the reduced lower protocol layer signal (18) to the second network node (16) via a wireless communication channel (21) between the base station (10) and the second network node (16) using lower protocol layer data frames.

9. The system of claim 1, wherein the second network node (16) comprises a sensor for sensing environmental data and wherein the first network node (15) comprises an application exchanging sensor data as the payload data with the sensor (16).

10. The system of claim 1, wherein the base station (10) is operable to control a reporting interval of the wireless sensor node (16) by scheduling physical radio resources dedicated the wireless sensor node's Media Access Control (MAC) address.

11. A system comprising an apparatus (10) and a base station (10) of a communication network (14) for relaying payload data between a second network node (16) and a first network node (15), the apparatus (10) comprising:
a receiver (13) operable to receive a reduced lower protocol layer signal (18) for the first network node (15), the reduced lower protocol layer signal originating from the second network node (16) and comprising the payload data without any header data corresponding to higher protocol layers of a network protocol stack;
a processor (12) operable to add said missing header data to the received reduced lower protocol layer signal (18) to obtain a higher protocol layer signal (17);
a transmitter (11) operable to forward the higher protocol layer signal (17) comprising the payload data and the added header data to the first network node (15),
wherein the apparatus (10) is coupled to the base station of a wireless communication network, the base station (10) serving a wireless environmental sensor node (16) as the second network node, wherein the base station (10) is operable to receive sensor identification data from the wireless sensor node (16) via an uplink random access procedure and to provide the received sensor identification data to a register node (22) of the network (14), the register node (22) providing a network route from the first network node (15) to the wireless sensor node (16) via the base station (10) for the relaying of the payload data.

12. A method (40) of a communication network (14) for relaying payload data between a first network node (15) and a second network node (16), the method (40) comprising:
receiving (41) a higher protocol layer signal (17) for the second network node (16), the higher protocol layer signal (17) originating from the first network node (15) and comprising the payload data and header data corresponding to a higher protocol layer of a network protocol stack;
removing (42) at least part of the header data to obtain a reduced lower protocol layer signal (18) comprising the payload data; and
forwarding (43) the reduced lower protocol layer signal (18) to the second network node (16),
wherein the second node (16) is a wireless environmental sensor node served by a base station of a wireless communication network, wherein the base station (10) receives sensor identification data from the wireless sensor node (16) via an uplink random access procedure and provides the received sensor identification data to a register node (22) of the network (14), the register node (22) providing a network route from the first network node (15) to the wireless sensor node (16) via the base station (10).

13. A method (45) of a communication network (14) for relaying payload data between a second network node (16) and a first network node (15), the method (45) comprising:
receiving (46) a reduced lower protocol layer signal (18) for the first network node (15), the reduced lower protocol layer signal (18) originating from the second network node (16) and comprising the payload data without header data corresponding to a higher protocol layer of a network protocol stack;
adding (47) said header data to the received reduced lower protocol layer (18) signal to obtain a higher protocol layer signal (17);
forwarding (48) the higher protocol layer signal (17) comprising the payload data and the added header data to the first network node (15),
wherein the second node (16) is a wireless environmental sensor node served by a base station of a wireless communication network, wherein the base station (10) receives sensor identification data from the wireless sensor node (16) via an uplink random access procedure and provides the received sensor identification data to a register node (22) of the network (14), the register node (22) providing a network route from the first network node (15) to the wireless sensor node (16) via the base station (10).

14. A computer program having a program code for performing at least one step of the method of claim 12 or 13, if the computer program is executed on a programmable hardware device.

## Patentansprüche

1. System, umfassend eine Vorrichtung (10) und eine Basisstation (10) eines Kommunikationsnetzwerks (14) zum Übermitteln von Nutzdaten zwischen einem ersten Netzwerkknoten (15) und einem zweiten Netzwerkknoten (16), wobei die Vorrichtung umfasst:
Einen Empfänger (11), betreibbar für den Empfang eines Signals (17) einer höheren Protokollschicht für den zweiten Netzwerkknoten (16), wobei das Signal (17) der höheren Protokollschicht von dem ersten Netzwerkknoten (15) stammt und die Nutzdaten und die Header-Daten, welche einer höheren Protokollschicht eines Netzwerkprotokollstapels entsprechen, enthält;
einen Prozessor (12), betreibbar für das Entfernen zumindest eines Teils der Header-Daten, um ein reduziertes Signal (18) einer niedrigeren Protokollschicht, welches die Nutzdaten enthält, zu erhalten; und
einen Sender (13), betreibbar für das Weiterleiten des reduzierten Signals (18) der niedrigeren Protokollschicht an den zweiten Netzwerkknoten (16),
wobei die Vorrichtung (10) an die Basisstation eines drahtlosen Kommunikationsnetzwerks gekoppelt ist, wobei die Basisstation (10) einen drahtlosen Umgebungs-Sensorknoten (16) als den zweiten Netzwerkknoten bedient, wobei die Basisstation (10) betreibbar ist, um über ein Uplink-Direktzugriffsverfahren Sensoridentifikationsdaten von dem drahtlosen Sensorknoten (16) zu empfangen und die empfangenen Sensoridentifikationsdaten an einen Registerknoten (22) des Netzwerks (14) bereitzustellen, wobei der Registerknoten (22) eine Netzwerkroute von dem ersten Netzwerkknoten (15) über die Basisstation (10) zu dem drahtlosen Sensorknoten (16) für die Übermittlung der Nutzdaten bereitstellt.

2. System nach Anspruch 1, wobei der Prozessor (12) betreibbar ist, um auf Informationen auf dem zweiten Netzwerkknoten (16) zuzugreifen und die Header-Daten aus dem Signal (17) der höheren Protokollschicht zu entfernen, wenn die besagten Informationen anzeigen, dass der zweite Netzwerkknoten (16) die höhere Protokollschicht nicht unterstützt.

3. System nach Anspruch 1, wobei das empfangene Signal (17) der höheren Protokollschicht von einem Registerknoten (22), der eine Assoziation zwischen der Vorrichtung (10) und dem zweiten Netzwerkknoten (16) registriert hat, an die Vorrichtung (10) umgeleitet wurde, um eine Netzwerkroute über die Vorrichtung (10) zu dem zweiten Netzwerkknoten (16) zu finden.

4. System nach Anspruch 3, wobei die registrierte Assoziation eine Kennung des zweiten Netzwerkknotens (16) umfasst, welche zusammen mit einer Netzwerkkennung der Vorrichtung (10) von der Vorrichtung (10) an den Registerknoten (22) bereitgestellt wird.

5. System nach Anspruch 4, wobei die Kennung des zweiten Netzwerkknotens (16) eine Medienzugangssteuerungs- bzw. MAC-Adresse des zweiten Netzwerkknotens (16) umfasst.

6. System nach Anspruch 4, wobei die Netzwerkkennung der Vorrichtung (10) eine Internetprotokoll- bzw. IP-Adresse der Vorrichtung (10) umfasst.

7. System nach Anspruch 1, wobei das empfangene Signal (17) der höheren Protokollschicht Internetschicht- und/oder Transportschicht-Header-Daten enthält, wobei der Prozessor (12) betreibbar ist, um Internetprotokoll- bzw. IP-Header-Daten und/oder Übertragungssteuerungsprotokoll- bzw. TCP-Header-Daten zu entfernen, und wobei der Sender (13) betreibbar ist, um die Nutzdaten als Medienzugangssteuerungs- bzw. MAC-Schicht-Daten ohne die entfernten IP- und/oder TCP-Header-Daten weiterzuleiten.

8. System nach Anspruch 1, wobei die Vorrichtung (10) eine Basisstation eines drahtlosen Kommunikationsnetzwerks ist, wobei die Basisstation (10) den zweiten Netzwerkknoten (16) bedient, und wobei der Sender (13) betreibbar ist, um das reduzierte Signal (18) der niedrigeren Protokollschicht über einen drahtlosen Kommunikationskanal (21) zwischen der Basisstation (10) und dem zweiten Netzwerkknoten (16) unter Verwendung von Datenrahmen der niedrigeren Protokollschicht an den zweiten Netzwerkknoten (16) weiterzuleiten.

9. System nach Anspruch 1, wobei der zweite Netzwerkknoten (16) einen Sensor zum Abtasten von Umgebungsdaten umfasst, und wobei der erste Netzwerkknoten (15) eine Anwendung für den Austausch von Sensordaten als die Nutzdaten mit dem Sensor (16) umfasst.

10. System nach Anspruch 1, wobei die Basisstation (10) für die Steuerung eines Meldeintervalls des drahtlosen Sensorknotens (16) durch die zeitliche Planung von physischen Funkressourcen, die der Medienzugangssteuerungs- bzw. MAC-Adresse dediziert sind, betreibbar ist.

11. System, umfassend eine Vorrichtung (10) und eine Basisstation (10) eines Kommunikationsnetzwerks (14) zum Übermitteln von Nutzdaten zwischen einem zweiten Netzwerkknoten (16) und einem ersten Netzwerkknoten (15), wobei die Vorrichtung (10) umfasst:
Einen Empfänger (13), betreibbar für den Empfang eines reduzierten Signals (18) einer niedrigeren Protokollschicht für den ersten Netzwerkknoten (15), wobei das reduzierte Signal der niedrigeren Protokollschicht von dem zweiten Netzwerkknoten (16) stammt und die Nutzdaten ohne Header-Daten, welche einer höheren Protokollschicht eines Netzwerkprotokollstapels entsprechen, enthält;
einen Prozessor (12), betreibbar für das Hinzufügen der besagten fehlenden Header-Daten zu dem empfangenen reduzierten Signal (18) der niedrigeren Protokollschicht, um ein Signal (17) einer höheren Protokollschicht zu erhalten; und
einen Sender (11), betreibbar für das Weiterleiten des Signals (17) der höheren Protokollschicht, welches die Nutzdaten und die hinzugefügten Header-Daten enthält, an den ersten Netzwerkknoten (15),
wobei die Vorrichtung (10) an die Basisstation eines drahtlosen Kommunikationsnetzwerks gekoppelt ist, wobei die Basisstation (10) einen drahtlosen Umgebungs-Sensorknoten (16) als den zweiten Netzwerkknoten bedient, wobei die Basisstation (10) betreibbar ist, um über ein Uplink-Direktzugriffsverfahren Sensoridentifikationsdaten von dem drahtlosen Sensorknoten (16) zu empfangen und die empfangenen Sensoridentifikationsdaten an einen Registerknoten (22) des Netzwerks (14) bereitzustellen, wobei der Registerknoten (22) eine Netzwerkroute von dem ersten Netzwerkknoten (15) über die Basisstation (10) zu dem drahtlosen Sensorknoten (16) für die Übermittlung der Nutzdaten bereitstellt.

12. Verfahren (40) eines Kommunikationsnetzwerks (14) zum Übermitteln von Nutzdaten zwischen einem ersten Netzwerkknoten (15) und einem zweiten Netzwerkknoten (16), wobei das Verfahren (40) umfasst:
Empfangen (41) eines Signals (17) einer höheren Protokollschicht für den zweiten Netzwerkknoten (16), wobei das Signal (17) der höheren Protokollschicht von dem ersten Netzwerkknoten (15) stammt und die Nutzdaten und die HeaderDaten, welche einer höheren Protokollschicht eines Netzwerkprotokollstapels entsprechen, enthält;
Entfernen (42) zumindest eines Teils der Header-Daten, um ein reduziertes Signal (18) einer niedrigeren Protokollschicht, welches die Nutzdaten enthält, zu erhalten; und
Weiterleiten (43) des reduzierten Signals (18) der niedrigeren Protokollschicht an den zweiten Netzwerkknoten (16),
wobei der zweite Netzwerkknoten (16) ein von einer Basisstation eines drahtlosen Kommunikationsnetzwerks bedienter drahtloser Umgebungs-Sensorknoten ist, wobei die Basisstation (10) über ein Uplink-Direktzugriffsverfahren Sensoridentifikationsdaten von dem drahtlosen Sensorknoten (16) empfängt und die empfangenen Sensoridentifikationsdaten an einen Registerknoten (22) des Netzwerks (14) bereitstellt, wobei der Registerknoten (22) eine Netzwerkroute von dem ersten Netzwerkknoten (15) über die Basisstation (10) zu dem drahtlosen Sensorknoten (16) bereitstellt.

13. Verfahren (45) eines Kommunikationsnetzwerks (14) zum Übermitteln von Nutzdaten zwischen einem zweiten Netzwerkknoten (16) und einem ersten Netzwerkknoten (15), wobei das Verfahren (45) umfasst:
Empfangen (46) eines reduzierten Signals (18) einer niedrigeren Protokollschicht für den ersten Netzwerkknoten (15), wobei das reduzierte Signal (18) der niedrigeren Protokollschicht von dem zweiten Netzwerkknoten (16) stammt und die Nutzdaten ohne Header-Daten, welche einer höheren Protokollschicht eines Netzwerkprotokollstapels entsprechen, enthält;
Hinzufügen (47) der besagten Header-Daten zu dem empfangenen reduzierten Signal (18) der niedrigeren Protokollschicht, um ein Signal (17) einer höheren Protokollschicht zu erhalten;
Weiterleiten (48) des Signals (17) der höheren Protokollschicht, welches die Nutzdaten und die hinzugefügten Header-Daten enthält, an den ersten Netzwerkknoten (15),
wobei der zweite Knoten (16) ein von einer Basisstation eines drahtlosen Kommunikationsnetzwerks bedienter drahtloser Umgebungs-Sensorknoten ist, wobei die Basisstation (10) über ein Uplink-Direktzugriffsverfahren Sensoridentifikationsdaten von dem drahtlosen Sensorknoten (16) empfängt und die empfangenen Sensoridentifikationsdaten an einen Registerknoten (22) des Netzwerks (14) bereitstellt, wobei der Registerknoten (22) eine Netzwerkroute von dem ersten Netzwerkknoten (15) über die Basisstation (10) zu dem drahtlosen Sensorknoten (16) bereitstellt.

14. Computerprogramm mit einem Programmcode zur Durchführung mindestens eines Schrittes des Verfahrens gemäß Anspruch 12 oder 13, wenn das Computerprogramm auf einer programmierbaren Hardware-Vorrichtung ausgeführt wird.

## Revendications

1. Système comprenant un appareil (10) et une station de base (10) d'un réseau de communication (14) pour relayer des données de charge utile entre un premier noeud de réseau (15) et un deuxième noeud de réseau (16), l'appareil (10) comprenant :
un récepteur (11) permettant de recevoir un signal de couche de protocole supérieure (17) pour le deuxième noeud de réseau (16), le signal de couche de protocole supérieure (17) provenant du premier noeud de réseau (15) et comprenant les données de charge utile et les données d'en-tête correspondant à une couche de protocole supérieure d'une pile de protocoles du réseau ;
un processeur (12) permettant de supprimer au moins une partie des données d'en-tête pour obtenir un signal de couche de protocole inférieure réduit (18) comprenant les données de charge utile ; et
un émetteur (13) permettant de transférer le signal de couche de protocole inférieure réduit (18) vers le deuxième noeud de réseau (16),
dans lequel l'appareil (10) est couplé à la station de base d'un réseau de communication sans fil, la station de base (10) desservant un noeud de capteur d'environnement sans fil (16) en tant que deuxième noeud de réseau, dans lequel la station de base (10) permet de recevoir des données d'identification de capteur provenant du noeud de capteur sans fil (16) par l'intermédiaire d'une procédure d'accès aléatoire de liaison montante et de fournir les données d'identification de capteur reçues à un noeud de registre (22) du réseau (14), le noeud de registre (22) fournissant un chemin de réseau entre le premier noeud de réseau (15) et le noeud de capteur sans fil (16) par l'intermédiaire de la station de base (10), pour relayer les données de charge utile.

2. Système selon la revendication 1, dans lequel le processeur (12) permet d'accéder à des informations sur le deuxième noeud de réseau (16) et de supprimer les données d'en-tête du signal de couche de protocole supérieure (17) si lesdites informations indiquent que le deuxième noeud de réseau (16) ne prend pas en charge la couche de protocole supérieure.

3. Système selon la revendication 1, dans lequel le signal de couche de protocole supérieure reçu (17) a été redirigé vers l'appareil (10) à partir d'un noeud de registre (22) ayant enregistré une association entre l'appareil (10) et le deuxième noeud de réseau (16) pour trouver un chemin de réseau vers le deuxième noeud de réseau (16) par l'intermédiaire de l'appareil (10).

4. Système selon la revendication 3, dans lequel l'association enregistrée comprend un identifiant du deuxième noeud de réseau (16) fourni au noeud de registre (22) à partir de l'appareil (10) avec un identifiant de réseau de l'appareil (10).

5. Système selon la revendication 4, dans lequel l'identifiant du deuxième noeud de réseau (16) comprend une adresse de contrôle d'accès au support (MAC) du deuxième noeud de réseau (16).

6. Système selon la revendication 4, dans lequel l'identifiant de réseau de l'appareil (10) comprend une adresse de protocole Internet (IP) de l'appareil (10).

7. Système selon la revendication 1, dans lequel le signal de couche de protocole supérieure reçu (17) comprend des données d'en-tête de couche Internet et/ou de couche de transport, dans lequel le processeur (12) permet de supprimer des données d'en-tête de protocole Internet (IP) et/ou de protocole de contrôle de transmission (TCP), et dans lequel l'émetteur (13) permet de transférer les données de charge utile en tant que données de couche de contrôle d'accès au support (MAC) sans les données d'en-tête IP et/ou TCP supprimées.

8. Système selon la revendication 1, dans lequel l'appareil (10) est une station de base d'un réseau de communication sans fil, la station de base (10) desservant le deuxième noeud de réseau (16), et dans lequel l'émetteur (13) permet de transférer le signal de couche de protocole inférieure réduit (18) vers le deuxième noeud de réseau (16) par l'intermédiaire d'un canal de communication sans fil (21) entre la station de base (10) et le deuxième de noeud de réseau (16) en utilisant des trames de données de couche de protocole inférieure.

9. Système selon la revendication 1, dans lequel le deuxième noeud de réseau (16) comprend un capteur pour détecter des données environnementales et dans lequel le premier noeud de réseau (15) comprend une application échangeant des données de capteur, en tant que données de charge utile, avec le capteur (16).

10. Système selon la revendication 1, dans lequel la station de base (10) permet de contrôler un intervalle de rapport du noeud de capteur sans fil (16) en planifiant des ressources radio physiques dédiées à l'adresse de contrôle d'accès au support (MAC) du noeud de capteur sans fil.

11. Système comprenant un appareil (10) et une station de base (10) d'un réseau de communication (14) pour relayer des données de charge utile entre un deuxième noeud de réseau (16) et un premier noeud de réseau (15), l'appareil (10) comprenant :
un récepteur (13) permettant de recevoir un signal de couche de protocole inférieure réduit (18) pour le premier noeud de réseau (15), le signal de couche de protocole inférieure réduit provenant du deuxième noeud de réseau (16) et comprenant les données de charge utile sans aucune donnée d'en-tête correspondant aux couches de protocole supérieures d'une pile de protocoles du réseau ;
un processeur (12) permettant d'ajouter lesdites données d'en-tête manquantes au signal de couche de protocole inférieure réduit reçu (18) pour obtenir un signal de couche de protocole supérieure (17) ;
un émetteur (11) permettant de transférer le signal de couche de protocole supérieure (17), comprenant les données de charge utile et les données d'en-tête ajoutées, vers le premier noeud de réseau (15),
dans lequel l'appareil (10) est couplé à la station de base d'un réseau de communication sans fil, la station de base (10) desservant un noeud de capteur d'environnement sans fil (16) en tant que deuxième noeud de réseau, dans lequel la station de base (10) permet de recevoir des données d'identification de capteur provenant du noeud de capteur sans fil (16) par l'intermédiaire d'une procédure d'accès aléatoire de liaison montante et de fournir les données d'identification de capteur reçues à un noeud de registre (22) du réseau (14), le noeud de registre (22) fournissant un chemin de réseau entre le premier noeud de réseau (15) et le noeud de capteur sans fil (16) par l'intermédiaire de la station de base (10), pour relayer les données de charge utile.

12. Procédé (40) d'un réseau de communication (14) pour relayer des données de charge utile entre un premier noeud de réseau (15) et un deuxième noeud de réseau (16), le procédé (40) comprenant les étapes suivantes :
recevoir (41) un signal de couche de protocole supérieure (17) pour le deuxième noeud de réseau (16), le signal de couche de protocole supérieure (17) provenant du premier noeud de réseau (15) et comprenant les données de charge utile et les données d'en-tête correspondant à une couche de protocole supérieure d'une pile de protocoles du réseau ;
supprimer (42) au moins une partie des données d'en-tête pour obtenir un signal de couche de protocole inférieure réduit (18) comprenant les données de charge utile ; et
transférer (43) le signal de couche de protocole inférieure réduit (18) vers le deuxième noeud de réseau (16),
dans lequel le deuxième noeud (16) est un noeud de capteur d'environnement sans fil desservi par une station de base d'un réseau de communication sans fil, dans lequel la station de base (10) reçoit des données d'identification de capteur provenant du noeud de capteur sans fil (16) par l'intermédiaire d'une procédure d'accès aléatoire de liaison montante et fournit les données d'identification de capteur reçues à un noeud de registre (22) du réseau (14), le noeud de registre (22) fournissant un chemin de réseau entre le premier noeud de réseau (15) et le noeud de capteur sans fil (16) par l'intermédiaire de la station de base (10).

13. Procédé (45) d'un réseau de communication (14) pour relayer des données de charge utile entre un deuxième noeud de réseau (16) et un premier noeud de réseau (15), le procédé (45) comprenant les étapes suivantes :
recevoir (46) un signal de couche de protocole inférieure réduit (18) pour le premier noeud de réseau (15), le signal de couche de protocole inférieure réduit (18) provenant du deuxième noeud de réseau (16) et comprenant les données de charge utile sans données d'en-tête correspondant à une couche de protocole supérieure d'une pile de protocoles du réseau ;
ajouter (47) lesdites données d'en-tête au signal de couche de protocole inférieure réduit reçu (18) pour obtenir un signal de couche de protocole supérieure (17);
transférer (48) le signal de couche de protocole supérieure (17), comprenant les données de charge utile et les données d'en-tête ajoutées, vers le premier noeud de réseau (15),
dans lequel le deuxième noeud (16) est un noeud de capteur d'environnement sans fil desservi par une station de base d'un réseau de communication sans fil, dans lequel la station de base (10) reçoit des données d'identification de capteur provenant du noeud de capteur sans fil (16) par l'intermédiaire d'une procédure d'accès aléatoire de liaison montante et fournit les données d'identification de capteur reçues à un noeud de registre (22) du réseau (14), le noeud de registre (22) fournissant un chemin de réseau entre le premier noeud de réseau (15) et le noeud de capteur sans fil (16) par l'intermédiaire de la station de base (10).

14. Programme informatique possédant un code de programme pour exécuter au moins une étape du procédé selon la revendication 12 ou 13, si le programme informatique est exécuté sur un dispositif matériel programmable.
